# EUROPEAN PATENT SPECIFICATION

(11) **EP 0 980 774 B1**
(45) Date of publication and mention of the grant of the patent: **14.06.2006**
(21) Application number: 99116421.1
(22) Date of filing: 20.08.1999
(51) Int. Cl.: B60G 21/06

(54) **Suspension apparatus for vehicles**
Fahrzeugaufhängungsvorrichtung
Dispositif de suspension pour véhicule

(30) Priority: 20.08.1998 JP 23478598
(43) Date of publication of application: 23.02.2000
(73) Proprietor: YAMAHA HATSUDOKI KABUSHIKI KAISHA, Iwata-shi Shizuoka-ken (JP)
(72) Inventor: Sakai, Koji, c/o Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- US-A- 3 032 349
- US-A- 5 547 211
- PATENT ABSTRACTS OF JAPAN vol. 1996, no. 09, 30 September 1996 (1996-09-30) & JP 08 132846 A (YAMAHA MOTOR CO LTD), 28 May 1996 (1996-05-28)
- PATENT ABSTRACTS OF JAPAN vol. 018, no. 319 (M-1623), 17 June 1994 (1994-06-17) & JP 06 072127 A (YAMAHA MOTOR CO LTD), 15 March 1994 (1994-03-15)
- PATENT ABSTRACTS OF JAPAN vol. 013, no. 154 (M-814), 14 April 1989 (1989-04-14) & JP 63 315314 A (HIDEO NAKADA), 23 December 1988 (1988-12-23)

## Description

The present invention relates to a suspension apparatus for vehicles of the type wherein: first and second hydraulic cylinders are pivotally supportable on a chassis of a vehicle and connectable to first and second wheels,respectively; cylinder cases of which are divided by pistons; one chamber of each of the first and second hydraulic cylinders serves as a compression chamber and the other as an oil reservoir chamber, the two chambers in each cylinder being connected through a main constriction; first and second pressure-adjusting cylinders being mounted to service the respective first and second hydraulic cylinders, and ganged pistons in the respective cylinder cases dividing the cases into main and auxiliary chambers; and independent passages connecting the main chambers of these first and second pressure-adjusting cylinders to the respective pressure chambers of the first and second hydraulic cylinders through an auxiliary constriction into the foregoing main chambers.

Such vehicle suspension apparatus have been described in Japan Patent Application JP-A- 06072127, which is seen as the closest prior art, and JP-A-08 132 846, etc.

According to those patents, the first and second hydraulic cylinders span the vehicle chassis and the wheels. These first and second hydraulic cylinders are composed of cylinder cases which are connected at one of their ends to either the chassis or to the first and second wheels while the other end is connected to respective pistons which divide the foregoing cylinder cases into two chambers. Between these two chambers, when pressure is applied to cause the first and second hydraulic cylinders to contract, one chamber functions as a pressure chamber and the other as an oil reservoir, and those two chambers are connected by a main constriction in each cylinder.

Further two pressure-adjusting cylinders are used for the respective foregoing first and second hydraulic cylinders and these first and second pressure-adjusting cylinders are composed of respective cylinder cases which are supported on the side of the chassis. Each inside of these cylinder cases is divided into a main chamber and an auxiliary chamber by a piston. The movement of these two pistons is ganged together, and there are independent passages from the respective pressure chambers of the first and second hydraulic cylinders to the main chambers of the first and second pressure-adjusting cylinders. On the other hand, the foregoing two main chambers are linked through an auxiliary constriction. Further, a pressure application means is included that can apply pressure to the first and second pressure-adjusting cylinders to cause their main chambers to contract.

Then, when the car is moving over a bumpy road surface, and the wheels are impacted by that road surface, the shocks to the vehicle are counteracted by the damping action attained through the expansion and contraction movement of the foregoing hydraulic cylinders.

The above damping action will be explained below for a first and second typical example.

A first example, the automobile is impacted by shocks of approximately the same magnitude at its front left and right wheels. In this case, both the foregoing hydraulic cylinders contract, in other words, the foregoing hydraulic cylinders "operate in the same direction."

Thus, when both hydraulic cylinders "operate in the same direction", the piston in the respective hydraulic cylinders causes the oil in their respective pressure chambers to be pressurized under approximately the same conditions, which results in approximately the same oil pressure values in the pressure chambers, which means that almost no oil would flow through the auxiliary constriction. Accordingly a portion of the oil in each of the foregoing pressure chambers opposes the pressure from the foregoing pressure application means and some flows into the main chambers of the foregoing respective pressure-adjusting cylinders. At the same time, the remainder of the oil in the foregoing pressure chambers flows into the oil reservoir chamber through the respective main constrictions.

Then, when oil is flowing through each of the foregoing main constrictions, because of the attenuation characteristics of these main constrictions, the impact energy from the above described shock is converted into heat energy, thereby damping that shock. To wit, the "operation in the same direction" implements a shock absorbing action.

A second example is the case of the vehicle turning sharply and only either the left or the right front wheel is substantially impacted. In this case, one of the hydraulic cylinders corresponding to one wheel will contract, while the other hydraulic cylinder expands, in other words, they "operate in opposite directions."

Thus, when the two hydraulic cylinders "operate in opposite directions" as described above, the action of the piston in one of the foregoing hydraulic cylinder pressure chambers pressures the oil, and a part of that oil, while opposing the pressure from the foregoing pressurization means, flows into main chamber of the particular pressure-adjusting cylinder, and in addition, through the foregoing auxiliary constriction, into the main chamber of the other hydraulic cylinder. Also, at the same time, the other portion of the pressurized oil in the particular hydraulic cylinder flows from the main chamber through the main constriction and into the oil reservoir chamber.

Then, while the oil is flowing through the foregoing main and auxiliary constrictions, the shock energy from the foregoing shocks is converted into heat energy based upon the attenuation properties of these constrictions. So doings damps the foregoing shock and inhibits the rolling of the chassis, in other words, it performs a damping action through "operation in opposite directions." When the above described type of hydraulic cylinders are mounted on both the front and rear wheels just as with the "operation in the opposite directions" not only can chassis rolling be inhibited as described above, the pitching of the chassis can also be restrained.

However, the prior art incurs the following problems.

First with regard to the damping action described in the first example for "operation in the same direction", shock attenuation takes place only through the main constriction, and the cross sectional area etc. of that main constriction must be predetermined to obtain the optimal attenuation properties.

On the other hand, in the second example that described "operation in opposite directions," the damping action involves the work of both the main and auxiliary constrictions, and those main and auxiliary constrictions are designed with cross sections etc. to deliver the optimum damping characteristics, since the action of the auxiliary constriction is added to that of the main constriction, as was the case above of "operating in the same direction," the cross sectional area of the main constriction is best set to be smaller than that used for the "operation in the same direction.

However, since separate design settings for the foregoing main constrictions cannot be set at the same time to handle the two cases above, the more the optimizing of the constrictions for one particular case, the less optimal is the setting for the other case.

Thus, the problem associated with the prior art is the impossibility to achieve optimal shock damping in both cases when the hydraulic cylinders "operate in the same direction" and when they "operate in different directions."

Accordingly, it is an objective of the present invention to provide a suspension system which will, when the vehicle is running and is impacted by the road surface, operate the hydraulic cylinders optimally when they "operate in the same direction", and when they "operate in different directions", and simultaneously presents the increase of the number of parts or the complexity of assembly for such damping apparatus, and additionally, facilitates the assembly of the apparatus in cases where there is not much working space to assemble it upon the vehicle.

According to the present invention this objective is solved for a suspension apparatus as indicated above by a sealed chamber that can freely expand and contract that serves each of the foregoing two auxiliary chambers, a pressure application means to apply pressure upon the sealed chamber to contract same and another auxiliary constriction that links the foregoing auxiliary chambers to the sealed chamber.

Further, it is possible that the foregoing sealed chamber is formed in the space surrounded by a cylinder case and a piston within the cylinder case, wherein the foregoing pressure application means pressurizes the foregoing sealed chamber by means of the foregoing piston, and wherein the movement of the foregoing piston is ganged to the movement of the pistons of the foregoing first and second pressure-adjusting cylinders.

Also, it is advantageous and possible that the foregoing sealed chamber is formed as a member that is separate and distinct from the foregoing first and second pressure-adjusting cylinders.

According to an embodiment, the suspension apparatus of this invention is composed of a first and second hydraulic cylinder 14, 16 that are pivotally supportable on a chassis 2 and are connectable to first and second wheels 4, 5, respectively, these first and second hydraulic cylinders 14, 16 have cylinder cases 19, that connect between the foregoing chassis 2 and the first and second wheels 4, 5, respectively, and these cylinder cases 19 are divided into two inside chambers by respective pistons 20, wherein one of the two chambers is a pressurizing chamber 22 that operates when the first or second hydraulic cylinder 14, 16 contract, while the other chamber is an oil reservoir chamber 23, these two chambers 22, 23 being linked through a main constriction 24, a first and second pressure-adjusting cylinder 26, 27 servicing the first and second hydraulic cylinders 14, 16, and these first and second pressure-adjusting cylinders being composed of respective cylinder cases 31, 37 and of pistons 33, 39 dividing the respective insides of the cylinder cases 31, 37 into two chambers, namely main chambers 34, 40 and auxiliary chambers 35, 41, respectively; and the movement of the two pistons 33, 39 being ganged, and independent connecting passages being present between each pressure chamber 22, 22 of the first and second hydraulic cylinders and the main chambers 34, 40 of the respective first and second pressure adjustment chambers which communicate through auxiliary constrictions 51 in the foregoing main chambers 34, 40, wherein:
the suspension apparatus for vehicles includes a sealed chamber 59 that is free to expand and contract and that services the foregoing auxiliary chambers 35, 41, a pressure application means 71 that can apply pressure to the sealed chamber 59 and cause it to contract, and the foregoing auxiliary chambers 35, 41 are linked to the sealed chamber 59 through another auxiliary constriction 76.

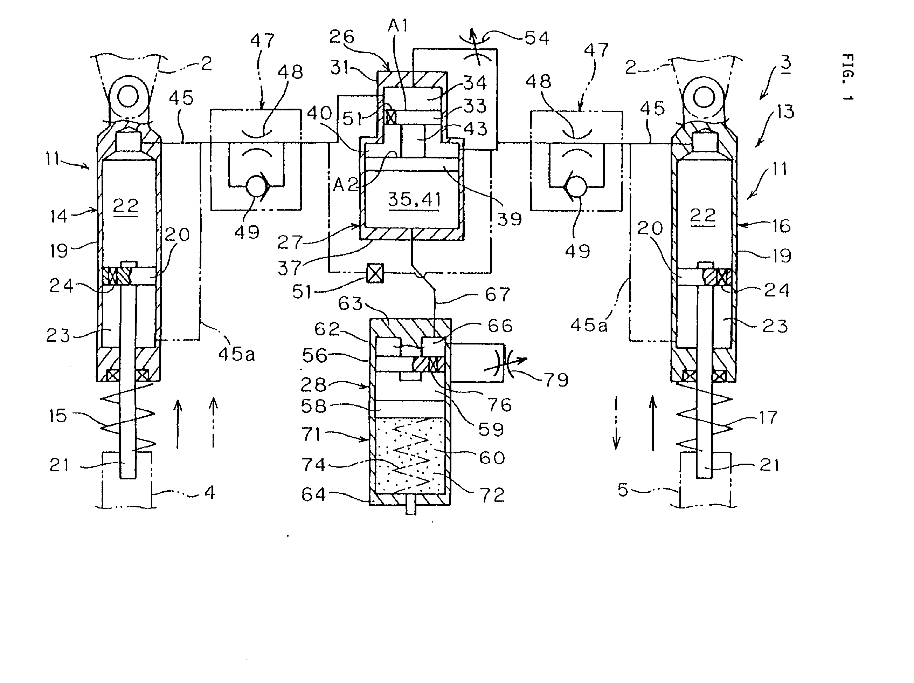

Figure 1 shows the state in which the foregoing first and second hydraulic cylinders 14, 16 are contracted, and the foregoing oil reservoir chambers 23 are pressurized. These oil reservoir chambers 23, 23 can function as pressurized chambers on the one hand and the foregoing pressure chambers 22 can function as the oil reservoir chambers on the other. The foregoing oil reservoir chambers 23, 23 are independently connected to the respective main chambers 34, 40 of the first and second pressure-adjusting cylinders 26, 27.

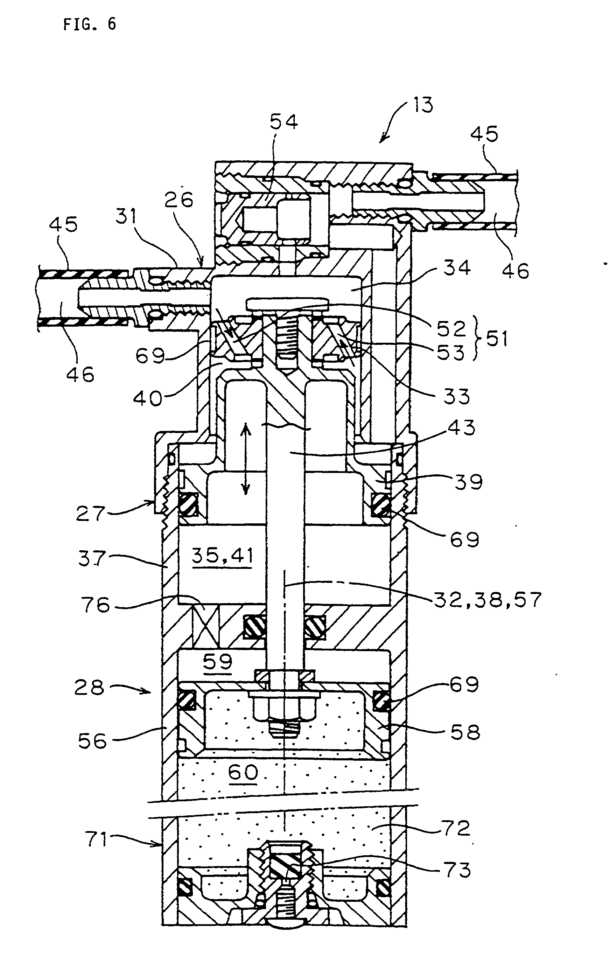

As shown in Figure 6, another embodiment adds to the invention that the foregoing sealed chamber 59 is formed in the space surrounded by a cylinder case 56 and a piston 58 inside the cylinder case, wherein the foregoing pressure application means 71 pressurizes the foregoing sealed chamber 59 by means of the foregoing piston 58, and wherein the movement of the foregoing piston 58 is ganged to the movement of pistons 33, 39 of the foregoing first and second pressure-adjusting cylinders 26, 27.

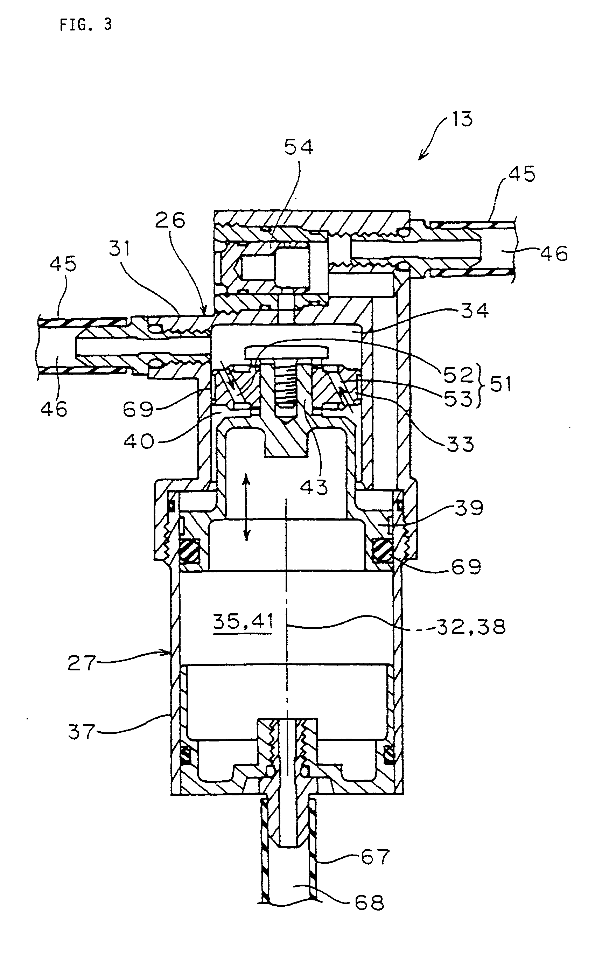

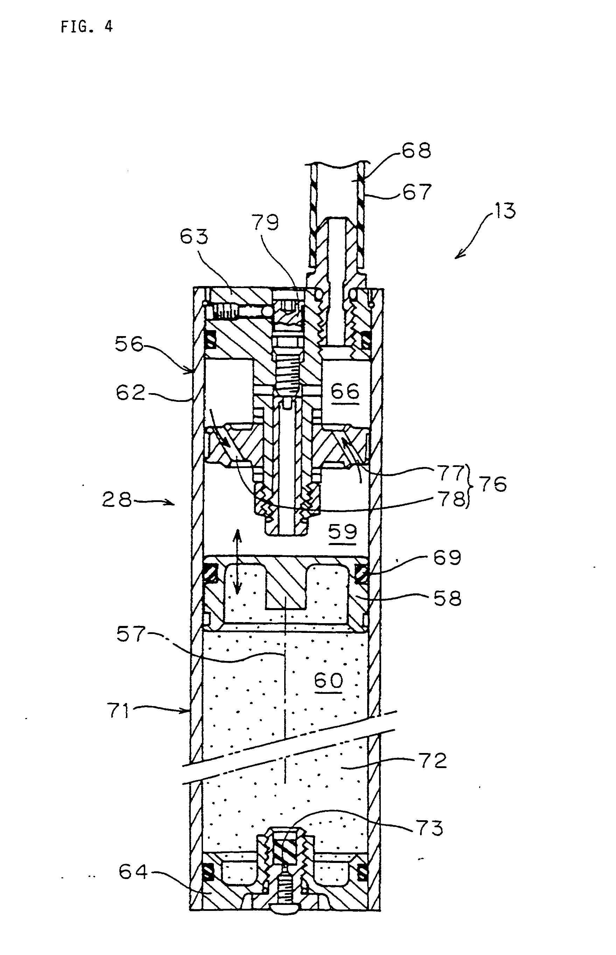

As shown in Figures 1 through 4, a further embodiment adds to the invention that the foregoing sealed chamber is formed by a member 59 that is separate from the foregoing first and second pressure-adjusting cylinders 26, 27.

In the following, the present invention is explained in greater detail with respect to several embodiments thereof in conjunction with the accompanying drawings, wherein:
**Figure 1** is an overall diagram of the first embodiment of the shock absorption apparatus.
**Figure 2** is a diagram showing a top view of a part of the apparatus of Figure 1.
**Figure 3** is a detailed line drawing showing a sectional view of a part of the apparatus of Figure 1.
**Figure 4** is a detailed diagram showing a sectional view of a part of the apparatus of Figure 1.
**Figure 5** is a view synthesized from Figures 3 and 4 of a second embodiment.
**Figure 6** is a view synthesized from Figures 3 and 4 of a third embodiment.

### (First Embodiment)

Figures 1 through 4 show a first embodiment.

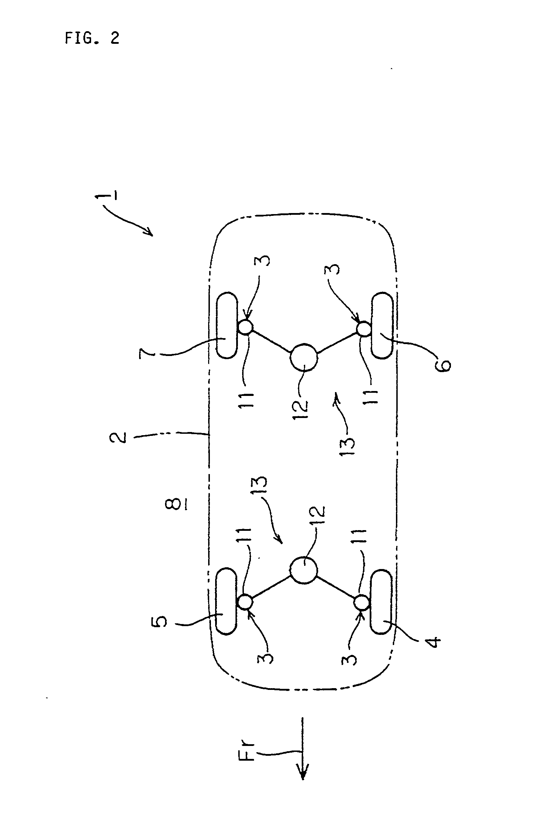

In Figure 2, reference number I represents a four-wheeled vehicle, which is moving in the direction of the arrow *Fr.*

The foregoing vehicle is composed of a chassis 2, a pair of left and right front wheels 4,5 that are linked to the suspension apparatus 3, and a pair of left and right rear wheels 6, 7, with said wheels 4-7 enabling said chassis to roll on the road surface 8.

Here, the foregoing left wheel 4 will be referred to as the first wheel 4, and the foregoing right wheel 5 will be referred to as the second wheel 5.

Throughout the Figures, the foregoing suspension apparatus 3 are pivotally supported by omitted links on the chassis to freely swing up and down, and near the wheels 4-7. The foregoing wheels 4-7 can swing up and down with the foregoing links. Hydraulic shock absorbers 11 are installed between the chassis 2 and the wheels 4-7. The hydraulic pressure adjustment apparatus 12 controls the shock absorbers 11, 11 for the first and second wheels 4, 5 in a coordinated manner, and another pressure adjustment apparatus 12 controls the left and right shock absorbers 11, 11 for the left and right rear wheels 6, 7 to control the rolling of the chassis, the shock absorbing apparatus 13 being composed of these shock absorbers 11 and pressure adjustment apparatus 12.

The shock absorber 11 of the first wheel 4 runs between the chassis 2 and at the first wheel 4 as described above and is free to expand and contract, and is composed of a first hydraulic cylinder 14, and a spring 15 which provides a resilient bias against the expansion of this first hydraulic cylinder 14. The shock absorber 11 from the second wheel 5 is similarly located with respect to the second wheel 5 and is composed of a second hydraulic cylinder 16 and a spring 17. Both the first and second hydraulic cylinders 14, 16 are positioned vertically, which enables them to extend or contract along their axes in the vertical direction. When the first and second wheels 4, 5 incur a shock from the road surface 8 while the vehicle 1 is running, these hydraulic cylinders contract 14, 16.

The first and second hydraulic cylinders 14, 16 each have a piston 20 which divides the inside of the cylinder cases 19 into two sealed chambers, the respective pistons 20 being free to slide within the cases 19, and with piston rods 21 extending from each piston 20. The pistons 20 are connected on the side of the first and second wheels 4, 5 by means of their piston rods 21. The two chambers inside the cylinder cases are filled with oil, and from among these two chambers, one is a pressure chamber 22 which is pressurized when the first and second hydraulic cylinders 14, 16 contract while the other chambers are oil reservoir chambers 23. Further, the pressure chamber 22 and the oil reservoir chamber 23 of each hydraulic cylinder 14, 16 are connected through a nozzle-like main constriction 24.

In the above-described case, it is also possible to connect the cylinder cases of the respective first and second hydraulic cylinders 14, 16 near the first and second wheels 4,5, and their pistons 20 to the side of the chassis 2.

The foregoing pressure adjustment apparatus services the foregoing first and second hydraulic cylinders 14, 16 and is composed of a first and second pressure-adjusting cylinder 26, 27 and of a third pressure-adjusting cylinder 28 that is separate from these first and second pressure-adjusting cylinders 26, 27.

The foregoing first pressure-adjusting cylinder 26 is composed of a cylinder case 31 that is supported on the chassis 2 and a piston 33 which is free to slide inside the cylinder case 31 along the axis 32 of the cylinder case 31. This piston 33 divides the inside of the cylinder case 31 into two sealed chambers, a main chamber 34 and an auxiliary chamber 35. On the other hand, the second pressure-adjusting cylinder 27 is similar to the above described pressure-adjusting cylinder 26 and is composed of a cylinder case 37 with axis 38, a piston 39, main chamber 40 and auxiliary chamber 41. The main chambers 34, 40 are filled with oil.

In the above described case, both of the axes 32, 38 are congruent, and both cylinder cases 31, 37 are parallel to the foregoing axes 32, 38 and are formed together as a single unit. Further, the two pistons 33, 39 run parallel to these axes 32, 38 but are slightly separated from each other in the axial direction. These pistons 33, 39 are ganged together by a fastener 43. In other words, these two pistons 33, 39 slide as a unit inside the cylinder cases 31, 37. Further, the diameter of the piston 39 of the second pressure-adjusting cylinder 27 is larger than the diameter of the piston 33 of the first pressure-adjusting cylinder. In this case, the area *A1* of the surface in the main chamber 34 opposite the piston 33 in the first pressure-adjusting cylinder 26 is 1/2 the area *A2* of the surface in the main chamber 40 opposite the piston 39 in the second pressure-adjusting cylinder 27. Since both pistons 33, 39 are ganged by means of the fastener 43, the effective pressurizing areas of the two pistons 33, 39 are equivalent.

As described above, the main chamber 34 of the first hydraulic cylinder is formed in the space surrounded by the first pressure-adjusting cylinder 26 and the piston 33 at one end of the unitized cylinder cases 31, 37. Further, the closed space defined by both pistons 33, 39 and the cylinder cases 31, 37 forms the main chamber 40 for the second pressure-adjusting cylinder. Further, at the other end of the foregoing cylinder cases 31, 37, the space defined by the piston 39 of the second pressure-adjusting cylinder 27 serves as the aforementioned auxiliary chamber 35, 41.

The pressure chambers 22, 22 of the first and second hydraulic cylinders 14, 16, are respectively connected to the main chambers 34, 40 of the first and second pressure-adjusting cylinders 26, 27 by hydraulic lines 46 inside connecting hoses 45. A speed controller 47 is located midway in these connecting hoses. These speed controllers 47 are composed of a parallel circuit that includes a constriction 48 and a one-way valve 49. The oil heading toward the main chambers 34, 40 from the foregoing pressure chambers 22 can only flow through the constriction 48 of the respective speed controllers 47 while in the reverse direction, in addition to flowing through the above constriction 48, the oil also flows through the one-way valve 49. Thus, the contraction of the first and second hydraulic cylinders 14, 16 is regulated by the foregoing constrictions 48 on the one hand, while their expansion causes the oil to flow through the one-way valves 49 and the constrictions 48, thereby allowing operating them rapidly.

The main chambers 34, 40 of the first and second pressure-adjusting cylinders 26, 27 are connected through a nozzle-like auxiliary constriction 51 formed in the piston 33 of the first pressure-adjusting cylinder 26. This auxiliary constriction 51 is composed of a one-way valve 52 that allows the oil to flow only in one direction from one of the foregoing main chambers 34, 40 to the other and of another one-way valve 53 that permits oil to flow only in one direction between the chambers. Further, the foregoing main chambers 34, 40 are also connected by a variable constriction valve 54.

As shown by the dashed line in Figure 1, instead of employing the foregoing auxiliary constrictions 51, it is possible to set up separate hydraulic lines outside the first and second pressure-adjusting cylinders 26, 27 and place an auxiliary constriction 51 in those lines.

The third pressure-adjusting cylinder 28 is composed of a cylinder case 56 that is supported on the chassis 2, of a cylinder case 56 and a piston 58 that is slidable inserted in the axial direction inside the cylinder case 56. This piston 58 divides the inside the cylinder case 56 into a sealed chamber 59 and another chamber 60.

The cylinder case 56 of the foregoing third pressure-adjusting cylinder 28 consists of a round case unit 62 with end caps 63, 64 closing off each end of the case member 62. Another auxiliary chamber 66 is formed between the foregoing case member 62 and one end cap 63, and a connecting hose 67 forms a hydraulic circuit 68 that links the above described auxiliary chambers 35, 41 to the other auxiliary chamber 66.

O-ring type seal members 69 are installed on the sliding area of each piston with respect to the inside circumferential surface of the foregoing cylinder cases 31, 37, 56, and these provide a seal over the sliding area.

The foregoing sealed chamber 59 services the various auxiliary chambers 35, 41 66, and its volume can freely expand or contract by sliding the piston 58. When the piston 58 is pressed by a pressure application means 71, the sealed chamber 59 contracts. This pressure application means 71 is composed of the other chamber 60 of the foregoing third pressure-adjusting cylinder and of pressurized gas 72 that is sealed inside this other chamber 60. The pressure of the pressurized gas 72 increases due to the contraction of the sealed chamber 59 when the foregoing piston 58 is pressed, and this action causes the oil inside the sealed chamber 59 to normally remain under pressure.

Further, reference number 73 represents a gas inlet. Also, it is possible to use a spring 74 or the combination of the above pressurized gas 72 and a spring 74 in the foregoing pressure application means to apply pressure to the piston 58, and in such cases the other chamber 60 may be open to the atmosphere.

The foregoing auxiliary chambers 35, 41 along with the auxiliary chamber 66 are connected through the other auxiliary constriction 76 to the sealed chamber 59 formed by the end cap seal 63 of the cylinder case 56 of the third pressure-adjusting cylinder. The other auxiliary constriction 76 is fitted with a one-way valve 77 that permits oil to flow from one chamber to the other from among the auxiliary chambers 35, 41, 66 and the sealed chamber 59, while another one-way valve 78 permits the flow of oil from the other chambers to the said chamber. Further, the foregoing auxiliary chambers 35, 41, 66 and the sealed chamber 59 are linked by a variable constriction valve 79.

With the above described structure, when the first and second wheels 4, of the vehicle 1 are impacted when running over the road surface 8, the shock absorbers 11 and the pressure adjustment apparatus of above described shock absorption apparatus 13 work to absorb and damp the shock. Since there are two typical examples of the foregoing shock absorbing action, they will be described below as a "first example" and "second example."

As a first example, the first and second wheels 4, 5 are impacted about equally at the same time as the vehicle rolls on the road surface, and both the first and second hydraulic cylinders 14, 16 contract. To wit, the first and second hydraulic cylinders 14, 16 "operate in the same direction" as shown by the solid arrow in Figure 1.

When this happens, part of the oil contained in the respective pressure chambers 22 of the first and second hydraulic cylinders 14, 16 applies pressure to the respective pistons 20 and flows through the constrictions 48 in the speed controllers 47 and into the main chamber 34 of the first pressure adjusting cylinder 26 and into the main chamber 40 of the second pressure adjusting cylinder 27.

Here, as was described above, when the first and second hydraulic cylinders "operate in the same direction," the pistons 20 of the first and second hydraulic cylinders 14, 16 apply pressure to the respective pressure chambers 22 under approximately the same conditions, which keeps the oil pressure at nearly identical values. Moreover, as described above, since the effective pressure area of each piston 33 and 39 is equivalent, almost no oil flows through the auxiliary constriction 51. Accordingly, part of the oil in each of the two pressure chambers 22 flows into the pressure chambers 34, 40 to press both pistons 33, 39 to contract the auxiliary chambers 35, 41.

When this happens, the oil in the two auxiliary chambers 35, 41 flows into the other auxiliary chamber 66 of the third pressure-adjusting cylinder 28, and from that point, while opposing the pressure imposed by the pressure application means 71 and the piston 58 on the sealed chamber 59, the oil in the other auxiliary chamber 66 flows through the other constriction 76 into the foregoing sealed chamber 59.

At the same time, the other portion of the oil in the pressure chambers 22 of the first and second hydraulic cylinders 14, 16 flows through the foregoing main constrictions 24 from those pressure chambers 22 into the oil reservoir chambers 23.

Then, when oil flows through the main constrictions 24 and the other auxiliary constriction 76, because of the attenuation characteristics of those constrictions, the shock energy based upon the above described impact is converted into heat energy, thereby damping those shocks through the absorption action of "operating in the same direction."

If the above variable constriction valve 79 is adjusted, it is possible to change the overall attenuation characteristics of that variable constriction valve and the other auxiliary constriction.

In the second example, the vehicle 1 turns sharply and only one of the first or second wheels 4, 5, wheel 4 for example, is substantially impacted. In this case, the first hydraulic cylinder 14 that corresponds to this first wheel contracts against the resistance of the spring 15, while on the other hand, the second hydraulic cylinder 16 remains extended under the force of the spring 17. In other words, as shown by the dash/dot arrow in Figure 1, the first and second hydraulic cylinders 14, 16 "operate in opposite directions."

Thus, part of the oil in the pressure chamber 22 of the first hydraulic cylinder is pressurized by the piston 20 in response to the contraction of the first hydraulic cylinder 14, and then it flows through the constriction 48 of the foregoing speed controller 47 and into the main chamber 34 of the first pressure-adjusting cylinder 26. On the other hand, since the pressure chamber 22 of the second hydraulic cylinder 16 is expanded with the extension of the second hydraulic cylinder 16, the oil in the main chamber 40 of the second pressure-adjusting cylinder 27 flows through the one-way valve 49 of the speed controller 47 and quickly flows into the pressure chamber 22 of the second hydraulic cylinder 16.

As a result, an oil pressure-differential is produced between the pressure of the main chamber 34 of the first pressure-adjusting cylinder 26 and that of the second pressure-adjusting cylinder 27. The oil in the main chamber 34 of the first pressure-adjusting cylinder 26 then flows through the auxiliary constriction 51 and into the main chamber 40 of the second pressure-adjusting cylinder 27.

In the foregoing case, the oil inside the first pressure-adjusting cylinder 26 and the second pressure-adjusting cylinder 27 flows from one main chamber 34 through the auxiliary constriction to the other main chamber 40 only, and accordingly, there is almost no flow of oil through the other auxiliary constriction 76 in the third pressure-adjusting cylinder 28.

During the above action, the remainder of the oil in the pressure chamber 22 of the first hydraulic cylinder 14 flows through the main constriction 24 and into the oil reserve chamber 28.

Then, when the oil flows through the main constriction 24 and the auxiliary constriction 51, the shock energy based upon the above described impact is converted into heat energy as a function of the attenuation properties of the two constrictions. This action damps the above impacts through the "operation in opposite directions" of the shock absorbers. This damping action prevents the chassis 2 from rolling.

Also, by adjusting the aforementioned variable constriction valve 54, it is possible to change the overall attenuation characteristics of the variable constriction valve 54 and of the auxiliary constriction 51.

Figure 2 shows this same scheme of the first wheel 4 and the second wheel 5 adapted to the left and right rear wheels 6, 7, and this arrangement inhibits the rolling of the chassis 2.

In the foregoing embodiment, chassis 2 rolling was inhibited by making the left front wheel 4 the first wheel 4 and the right front wheel 5 the second wheel, but instead of that arrangement, either the left or right from wheel 4, 5 could be the first wheel 4, and the left or right rear wheel 6 or 7 could be the second wheel 5. So doing would use a similar damping action to inhibit pitching, just as the above described case for inhibiting rolling. In that case, this suspension could be applied to two-wheeled vehicles as well.

In the damping described in the first example of "operating in the same direction" since the impacts are damped by members of the group of the main constrictions 24, the auxiliary constrictions 51 and the other auxiliary constriction 76, then the main constrictions 24 and the other auxiliary constrictions perform the work. Therefore, the cross-sectional area of the main constrictions 24 and the other auxiliary constriction 76 are designed in advance to provide optimal attenuation characteristics.

On the other hand, in the second example of "operating in opposite directions", from among the main constrictions, auxiliary constrictions and the other auxiliary constriction 76, it is primarily the main constrictions 24 and the auxiliary constrictions 51 that perform the damping action, and their cross sections are also designed for optimal damping action.

In the above case for designing optimal shock absorption when "operating in the same direction", a setpoint would be used for the other auxiliary constriction 76, and to optimize shock absorption when "operating in the opposite direction", a setpoint would be used for the auxiliary constrictions 51, thereby keeping one from interfering with the other.

When using these setpoints, first the main constriction 24 which provides damping for both "operation in the same direction" and "operation in opposite directions" is set for a constriction that provides optimal damping. Next, the setpoints for the foregoing auxiliary constrictions 51 and the other auxiliary constriction 76 would be set at their optimal damping action, thereby enabling optimal shock absorption action in either case, whether the shock absorbers be "operating in the same direction" or "operating in opposite directions."

Further, by means of the above described structure, it is possible to constitute the sealed chamber 59, to wit, the third pressure-adjusting cylinder 28, as a separate unit from the first and second pressure-adjusting cylinders and to implement the required connections with hoses.

This separation of the foregoing sealed chamber 59 makes it possible to hold down the size of the shock absorption apparatus 13 for damping the impacts, and surplus small spaces in the chassis can be effectively utilized.

This feature also facilitates installation of the shock absorption apparatus 13.

Also, as indicated in Figure 1, when both the first and second hydraulic cylinders 14, 16 contract, the retraction of the piston rod 21 into the cylinder case 19 causes an overall reduction in the total capacity of the foregoing pressure chambers 22 and the oil reservoir chambers 23. Accordingly, under this contraction action, instead of putting pressure on each of the foregoing pressure chambers 22, the oil flows from a pressure chamber 22 through the main constriction 24 into the oil reservoir 23, thereby also pressurizing each oil reservoir 23.

Thus, while the respective oil reservoirs are pressurized on the one hand, it is possible to allow the foregoing pressure chambers 22 to function as oil reservoir chambers, and then instead of using the connecting hose 45 shown in Figure 1 to connect the oil reservoir chambers 23, 23 with the main chambers 34, 40 of the first and second pressure-adjusting cylinders 26, 27, and other connection hoses 45a shown by the dash-dot line can be used to independently make the connections.

Also, in this case, the pressure chamber 22 of either of the first or second hydraulic cylinders 14, 16 can be connected with one or the other of the main chambers 34, 40, while the other hydraulic cylinder can use the oil reservoir chamber as a pressure chamber in the shock absorbing action, this oil reservoir chamber 23 however being connected to the other main chamber.

### (Second Embodiment)

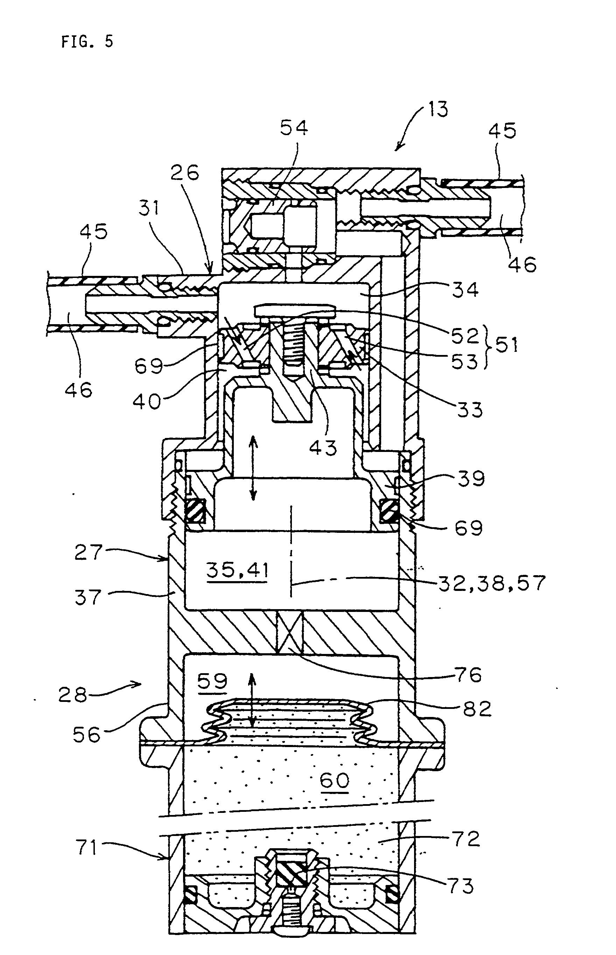

Figure 5 shows a second embodiment.

In this case, the respective cylinder cases 31, 37 and 56 of the first through third pressure adjusting cylinders 26 - 28 can be unitized and laid out on common axes 32, 38 and 57. This configuration makes it possible to reduce the number of parts in the foregoing shock absorption apparatus and to simplify its structure.

Further, instead of using piston 58 as in the first embodiment, it is possible to use a diaphragm 82 attached to the cylinder case 56. This design helps preventing oil from leaking in the areas where no sliding such as that of piston 58 takes place.

Since the other structures and the action is similar to that described for the first embodiment, corresponding parts have been given the same reference numbers in the Figures, and repetitive explanation of them will be omitted.

### (Third Embodiment)

Figure 6 shows a third embodiment.

In this embodiment, the cylinder cases 31, 37, and 56 of the first through third pressure-adjusting cylinders 26 - 28 are unitized along common axes 32, 38 and 57. This design reduces the number of parts of the shock absorption apparatus and simplifies its structure.

Here, the pistons 33, 39, and 58 of the first through third hydraulic cylinders 26 - 28 are respectively free to slide in the cylinder cases 31, 37 and 56 in the axial direction, and each sliding member has a seal 69 sealing them. Over long term usage, there would be some concern that leakage of oil or pressurized gas would cause the ganged pistons 33 and 39 and the piston 58 of the third pressure-adjusting cylinder 28, to be displaced from their axial positions inside the cylinder cases 31, 37, and 56.

Here, by ganging the pistons 33, 39 and 58 by means of the fastener 43, the above described piston group 33, 39 and 58 can operate in concert.

This design prevents the pistons 33, 39 and 58 from being displaced from their relative positions to each other and it prevents them from changing their positions with respect to the cylinder cases 31, 37 and 56. Accordingly, it is possible to achieve good dampening effects from the first and second hydraulic cylinders 26, 27 and the sealed chamber 59

Further still, during the assembly of the shock absorption apparatus, the pistons can be inserted in a group of pistons 33, 39 and the piston 58 for the sealed chamber 59 to their proper positions in the cylinder cases 31, 37 and 56 without having to install each one individually, thereby lessening the work required to determine their position, and improving the ease of installation.

The effects of this invention are as follow.

The effects of the invention, which is:
a suspension apparatus for vehicles of the type wherein: a first and second hydraulic cylinder are pivotally supported on the chassis of a vehicle and run to a first and second wheels, respectively; the two cylinder cases of which are divided on the inside by a piston in each of the cylinder cases and run from the chassis to the respective wheels; one chamber in the cylinder of each of the first and second hydraulic cylinders acting as a compression chamber and the other as an oil reservoir chamber, the two chambers in each cylinder communicating through a main constriction; a first and second pressure-adjusting cylinders mounted to act as the first and second hydraulic cylinders resp., and the ganged pistons in the respective cylinder cases dividing the cases into primary chamber and auxiliary chambers; and independent passages connecting the main chambers of these first and second pressure-adjusting cylinders to the respective pressure chambers of the first and second hydraulic cylinders through an auxiliary constriction into the foregoing main chambers, wherein;
the suspension apparatus for vehicles includes a sealed chamber that can freely expand and contract and that services each foregoing two auxiliary chamber, a pressure application means to apply pressure upon each of the foregoing sealed chambers by means of the foregoing pistons, and another auxiliary constriction that connects the foregoing auxiliary chambers to the sealed chamber;
are as follow.

To wit, when the wheels are impacted by the road surface, the first and second hydraulic cylinders typically either "operate in the same direction" or "operate in opposite directions."

When the first and second hydraulic cylinders "operate in the same direction", part of the oil in the pressure chambers of the respective first and second hydraulic cylinders, with almost no oil flowing through the auxiliary constrictions, presses against both pistons to contract the auxiliary chambers of the first and second pressure-adjusting cylinders even as the oil in the auxiliary chambers opposes the pressure from the application means, causing the oil to flow through the other auxiliary constriction into the sealed chamber.

Also, at the same time, the other portion of the oil in the pressure chambers in the first and second hydraulic cylinders flows from the respective pressure chambers through the main constrictions into the oil reservoir chambers.

Thus, the main constrictions and the other auxiliary constrictions experience oil flows during "operation in the same direction" by acting as dampers.

On the other hand, when the first and second hydraulic cylinders "operate in the opposite direction," for example when part of the oil in the pressure chamber of the first hydraulic cylinder, under pressure from the piston in conjunction with the contraction of the first hydraulic cylinder, flows into the main chamber of the first pressure-adjusting cylinder. On the other hand, the expansion of the pressure chamber in the second hydraulic cylinder that occurs when the cylinder is extended causes the oil in the main chamber of the second pressure-adjusting cylinder to flow into the pressure chamber of the second hydraulic cylinder. This procedure causes a pressure difference to develop between the two main chambers, and as a result, the oil flows through the auxiliary constrictions.

In the above case, the oil inside the first and second pressure adjustment chambers passes through the auxiliary constriction of one main chamber, but merely flows into the main chamber of the other. Accordingly, almost no oil flows through the other auxiliary constriction into the third pressure-adjusting cylinder.

Simultaneously with the above action, the other portion of the oil in the first pressure-adjusting cylinder passes through the main constriction and flows into the oil reservoir chamber.

Here, when "operating in the same direction" from the group of the main constrictions, auxiliary constrictions and the other auxiliary constriction, the main constrictions and the other constriction perform the work of damping the impacts. In this case, the cross-sectional area and other design characteristics of the main constrictions and the other auxiliary constriction can be designed for optimal shock absorbing characteristics.

On the other hand, when "operating in the opposite directions", from the group of the main constrictions, auxiliary constrictions and other auxiliary constrictions, the main constrictions and the auxiliary constrictions perform the work of damping the impacts. In this case, the sectional area and other design characteristics of the main constrictions and the auxiliary constrictions also can be designed for optimal attenuation characteristics.

In this case, this type of optimization for damping action for "operating in the same direction does not interfere with the shock-absorbing optimization for "operating in opposite directions."

Accordingly, in creating these design settings, optimization is first performed on the main constrictions, both of which come into play when the cylinders are "operating in the same direction" and "operating in opposite directions", with the purpose of providing optimal damping in both types of operation. Next, the design specifications are set for the auxiliary constrictions and the other auxiliary constriction for the respective cases of the first and second hydraulic cylinders "operating in the same direction" and "operating in opposite directions," thereby allowing optimal damping action in both cases.
Another embodiment of the invention, which provides that each foregoing sealed chamber shall be formed in the space surrounded by the cylinder and the piston inside the cylinder case,
wherein the foregoing pressure application means pressurizes the foregoing sealed chamber by means of the foregoing piston, and wherein the movement of the foregoing piston is ganged to the movement of the pistons of the foregoing first and second pressure-adjusting cylinders, has the following effects:

To wit, by inserting the pistons for the foregoing first through third pressure-adjusting cylinders into the cylinder cases in the axial direction so that they are free to slide, and by sealing each of the sliding members with a seal structure, it is possible to maintain the ganged pistons and the piston for the sealed chamber in their axially required positions, without worry that these positions would change over the long term from oil or pressurized gas leakages, to thereby obtain good damping action by the first and second pressure-adjusting cylinders and the sealed chamber.

Furthermore, the assembly of the shock absorption apparatus is facilitated by the pistons being inserted in the cylinder case as an assembly, allowing the assembly to be easily positioned and eliminating the need to adjust the position of each piston with respect to their cylinder cases as a separate assembly process. This procedure facilitates assembly, and improves assembly operation.
According to a further embodiment of the invention, the forgoing sealed chamber is located as a separate unit forming the foregoing first and second pressure-adjusting cylinders.

Relocation this sealed chamber apart reduces the space requirements for the shock absorption apparatus dampening the above described impacts, by reducing the size of the first and second pressure-adjusting cylinders. This method makes it possible to effectively utilize the small surplus spaces in the chassis.

Installation of the shock absorption apparatus is facilitated as a result.

## Claims

1. Suspension apparatus (3) for vehicles of the type wherein:
first and second hydraulic cylinders (14,16) are pivotally supportable on a chassis (2) of a vehicle and connectable to first and second wheels (4,5), respectively;
cylinder cases (19) of which are divided by pistons (20);
one chamber of each of the first and second hydraulic cylinders (14,16) serves as a compression chamber (22) and the other as an oil reservoir chamber (23), the two chambers (22,23) in each cylinder being connected through a main constriction (24);
first and second pressure-adjusting cylinders (26,27) being mounted to service the respective first and second hydraulic cylinders (14,16), and ganged pistons (33,39) in the respective cylinder cases (31,37) dividing the cases (31,37) into main (34,40) and auxiliary chambers (35,41); and
independent passages (45) connecting the main chambers (34,40) of these first and second pressure-adjusting cylinders (26,27) to the respective pressure chambers (22) of the first and second hydraulic cylinders (14,16) through an auxiliary constriction (51) into the foregoing main chambers (34,40),
**characterized by**
a sealed chamber (59) that can freely expand and contract that serves each of the foregoing two auxiliary chambers (35,41), a pressure application means (71) to apply pressure upon the sealed chamber (59) to contract same and another auxiliary constriction (76) that links the foregoing auxiliary chambers (35,41) to the sealed chamber (59).

2. Suspension apparatus for vehicles according to claim 1, **characterized in that** the foregoing sealed chamber (59) is formed in the space surrounded by a cylinder case (56) and a piston (58) within the cylinder case (56), wherein the foregoing pressure application means (71) pressurizes the foregoing sealed chamber (59) by means of the foregoing piston (58), and wherein the movement of the foregoing piston (58) is ganged to the movement of the pistons (33,39) of the foregoing first and second pressure-adjusting cylinders (26,27).

3. Suspension apparatus for vehicles according to claim 1, **characterized in that** the foregoing sealed chamber (59) is formed as a member that is separate and distinct from the foregoing first and second pressure-adjusting cylinders (26,27).

4. Suspension apparatus for vehicles according to at least one of the preceding claims 1 to 3, **characterized in that** the pressure chambers (22) of the first and second hydraulic cylinders (14,16) are connected to the main chambers (34,40) of the first and second pressure-adjusting cylinders (26,27) by hydraulic lines (46) and that a speed controller (47) being located within said lines (46).

5. Suspension apparatus for vehicles according to claim 4, **characterized in that** each speed controller (47) being composed of a parallel circuit including a constriction (48) and a one-way valve (49), said one-way valve (49) being oriented such that it closes when hydraulic oil flows from one or both of the first and second hydraulic cylinders (14,16) towards said first and second pressure-adjusting cylinders (26,27).

6. Suspension apparatus for vehicles according to at least one of the preceding claims 1 to 5, **characterized in that** the main chambers (34,40) of the first and second pressure adjusting cylinders (26,27) are connected via a variable constriction valve (54).

7. Suspension apparatus for vehicles according to at least one of the preceding claims 1 to 6, **characterized in that** the auxiliary constriction (51) being provided in a separate hydraulic line connecting the main chambers (34,40) of the first and second pressure-adjusting cylinders (26,27) with each other.

8. Suspension apparatus for vehicles according to at least one of the preceding claims 2 to 7, **characterized in that** the cylinder case (56) of a third pressure-adjusting cylinder (28) having said sealed chamber (59) consist of a round case unit (62) with end caps (63,64), that another auxiliary chamber (66) being formed between the case member (62) and one end cap (63), and that a connecting hose (67) forms a hydraulic circuit (68) linking the auxiliary chambers (35,41) of the first and second pressure-adjusting cylinder (26,27) with this other auxiliary chamber (66) of the third pressure-adjusting cylinder (28).

9. Suspension apparatus for vehicles according to claim 8, **characterized in that** the auxiliary chamber (35,41) of the first and second pressure-adjusting cylinders (26,27) are connected with the other auxiliary chamber (66) of the third pressure-adjusting cylinder (28) via a further auxiliary constriction (76).

10. Suspension apparatus for vehicles according to claim 8 or 9, **characterized in that** the auxiliary chambers (35,41) of the first and second pressure-adjusting cylinders (26,27) and the other auxiliary chamber (66) of the third pressure-adjusting cylinder (28) are linked with the sealed chamber (59) via a variable constriction valve (79).

11. Suspension apparatus for vehicles according to at least one of the preceding claims 8 to 10, **characterized in that** the respective cylinder cases (31,37,56) of the first through third pressure-adjusting cylinders (26,27,28) are unitized having one common axis (32,38,57).

12. Suspension apparatus for vehicles according to claim 11, **characterized in that** the piston of the third pressure-adjusting cylinder (28) is a diaphragm (82) attached to the cylinder case (56).

13. Suspension apparatus for vehicles according to claim 11, **characterized in that** the pistons (33,39,58) of the first through third pressure-adjusting cylinders (26,27,28) are ganged by means of a fastener (43).

## Patentansprüche

1. Aufhängungsvorrichtung (3) für Fahrzeuge des Typs, wobei:
erste und zweite Hydraulikzylinder (14, 16) schwenkbar lagerbar auf einem Chassis (2) eines Fahrzeuges und jeweils verbindbar mit ersten und zweite Rädern (4, 5) sind;
Zylindergehäuse (19) derselben sind durch Kolben (20) geteilt;
eine Kammer jeder der ersten und zweiten Hydraulikzylinder (14, 16) als eine Verdichtungskammer (22) und die andere als eine Ölreservoirkammer (23) dient,
die zwei Kammern (22, 23) in jedem Zylinder durch eine Haupt- Drosselstelle (24) verbunden sind;
erste und zweite Druckeinstellzylinder (26, 27) montiert sind, um dem jeweiligen ersten und zweiten Hydraulikzylinder (14, 16) zur Verfügung zu stehen, und gleichlaufende Kolben (33, 39) in den jeweiligen Zylindergehäusen (31, 37) die Gehäuse (31, 37) in Haupt- (34, 40) und Hilfskammern (35, 41) teilen; und
unabhängige Kanäle (45) die Hauptkammern (34, 40) dieser ersten und zweiten Druckeinstellzylinder (26, 27) mit den jeweiligen Druckkammern (22) des ersten und zweiten Hydraulikzylinders (14, 16) durch eine Hilfs- Drosselstelle (51) in den vorerwähnten Haupt- Kammern (34, 40) verbinden,
**gekennzeichnet durch**
eine abgedichtete Kammer (59), die sich frei erweitern oder zusammenziehen kann, die jede der zwei vorerwähnten Hilfskammern (35, 41) bedient, eine Druckanwendungseinrichtung (71), um Druck auf die abgedichtete Kammer (59) anzuwenden, um dieselbe zusammenzuziehen und eine weitere Hilfs-Drosselstelle (76), die die vorerwähnten Hilfskammern (35, 41) mit der abgedichteten Kammer (59) verbindet.

2. Aufhängungsvorrichtung für Fahrzeuge nach Anspruch 1, **dadurch gekennzeichnet, dass** die vorerwähnte abgedichtete Kammer (59) in dem Raum, umgeben durch einen Zylindergehäuse (56) und einen Kolben (58) innerhalb des Zylindergehäuses (56), gebildet ist, wobei die vorerwähnte Druckanwendungseinrichtung (71) die vorerwähnte abgedichteten Kammer (59) mittels des vorerwähnten Kolbens (58) unter Druck setzt, und wobei die Bewegung des vorerwähnten Kolbens (58) gleichlaufend mit der Bewegung der Kolben (33, 39) des vorerwähnten ersten und zweiten Druckeinstellzylinders (26, 27) ist.

3. Aufhängungsvorrichtung für Fahrzeuge nach Anspruch 1, **dadurch gekennzeichnet, dass** die vorerwähnte abgedichtete Kammer (59) als ein Teil gebildet ist, das separat und verschieden von dem vorerwähnten erste und zweite Druckeinstellzylinder (26, 27) ist.

4. Aufhängungsvorrichtung für Fahrzeuge nach zumindest einem der vorhergehenden Ansprüche 1 bis 3, **dadurch gekennzeichnet, dass** die Druckkammern (22) des ersten und zweiten Hydraulikzylinders (14, 16) mit den Hauptkammern (34, 40) der ersten und zweiten Druckeinstellzylinder (26, 27) durch Hydraulikleitungen (46) verbunden sind und dass ein Geschwindigkeitssteuerer (47) innerhalb der Leitungen (46) angeordnet ist.

5. Aufhängungsvorrichtung für Fahrzeuge nach Anspruch 4, **dadurch gekennzeichnet, dass** jeder Geschwindigkeitssteuerer (47) aus einer Parallelschaltung, bestehend aus einer Drosselstelle (48) und einem Rückschlagventil (49) besteht, wobei das Rückschlagventil (49) derart ausgerichtet ist, dass es schließt, wenn Hydrauliköl von einem oder beiden der ersten und zweiten Hydraulikzylinder (14, 16) in die Richtung zu dem ersten und zweiten Druckeinstellzylinder (26, 27) fließt.

6. Aufhängungsvorrichtung für Fahrzeuge nach zumindest einem der vorhergehenden Ansprüche 1 bis 5, **dadurch gekennzeichnet, dass** die Hauptkammern (35, 40) der ersten und zweiten Druckeinstellzylinder (26, 27) über ein veränderbares Drosselstellenventil (54) verbunden sind.

7. Aufhängungsvorrichtung für Fahrzeuge nach zumindest einem der vorhergehenden Ansprüche 1 bis 6, **dadurch gekennzeichnet, dass** die Hilfs- Drosselstelle (51) in einer separaten Hydraulikleitung vorgesehen ist, die die Hauptkammern (34, 40) des ersten und zweiten Druckeinstellzylinders (26, 27) miteinander verbindet.

8. Aufhängungsvorrichtung für Fahrzeuge nach zumindest einem der vorhergehenden Ansprüche 2 bis 7, **dadurch gekennzeichnet, dass** der Zylindergehäuse (56) eines dritten Druckeinstellzylinders (28), die die abgedichtete Kammer (59) hat, aus einer runden Gehäuseeinheit (62) mit Endkappen (63, 64) besteht, dass eine weitere Hilfskammer (66) zwischen dem Gehäuseteil (62) und einer Endkappe (63) gebildet ist, und dass ein Verbindungsschlauch (67) einen Hydraulikkreislauf (68) bildet, der die Hilfskammern (35, 41) des ersten und zweiten Druckeinstellzylinders (26, 27) mit dieser weiteren Hilfskammer (66) des dritten Drückeinstellzylinders (28) verbindet.

9. Aufhängungsvorrichtung für Fahrzeuge nach Anspruch 8, **dadurch gekennzeichnet, dass** die Hilfskammern (35, 41) der ersten und zweiten Druckeinstellzylinder (26, 27) mit der weiteren Hilfskammer (66) des dritten Druckeinstellzylinders (28) über eine weitere Hilfs- Drosselstelle (76) verbunden sind.

10. Aufhängungsvorrichtung für Fahrzeuge nach Änsprüch 8 oder 9, **dadurch gekennzeichnet, dass** die Hilfskammern (35, 41) des ersten und zweiten Druckeinstellzylinders (26, 27) und die weitere Hilfskammer (66) des dritten Druckeinstellzylinders (28) mit der der abgedichteten Kammer (59) über ein veränderbares Drosselstellenventil (79) verbunden sind.

11. Aufhängungsvorrichtung für Fahrzeuge nach zumindest einem der vorhergehenden Ansprüche 8 bis 10, **dadurch gekennzeichnet, dass** die jeweiligen Zylindergehäuse (31, 37, 56) des ersten bis dritten Druckeinstellzylinders (26, 27, 28) als eine Einheit gebildet sind, die eine gemeinsame Achse (32, 38, 57) haben.

12. Aufhängungsvorrichtung für Fahrzeuge nach Anspruch 11, **dadurch gekennzeichnet, dass** der Kolben des dritten Druckeinstellzylinders (28) eine Membran (82), verbunden mit dem Zylindergehäuse (56), ist.

13. Aufhängungsvorrichtung für Fahrzeuge nach Anspruch 11, **dadurch gekennzeichnet, dass** die Kolben (33, 39, 58) des ersten bis dritten Druckeinstellzylinders (26, 27, 28) mittels eines Befestigungsteiles (43) gleichlaufend verbunden sind.

## Revendications

1. Dispositif de suspension (3) pour véhicules du type dans lequel :
des premier et deuxième cylindres hydrauliques (14, 16) peuvent être supportés de manière,pivotante sur un châssis (2) d'un véhicule et peuvent être raccordés à des première et deuxième roues (4, 5), respectivement;
dont les carters de cylindre (19) sont divisés par des pistons (20);
une chambre de chacun des premier et deuxième cylindres hydrauliques (14, 16) sert de chambre de compression (22) et l'autre de chambre de réservoir d'huile (23), les deux chambres (22, 23) dans chaque cylindre étant raccordées par l'intermédiaire d'un étranglement principal (24) ;
des premier et deuxième cylindres d'ajustement de pression (26, 27) étant montés pour desservir les premier et deuxième cylindres hydrauliques (14, 16) respectifs, et des pistons accouplés (33, 39) dans les carters de cylindre (31, 37) respectifs divisant les carters (31, 37) en chambres principales (34, 40) et auxiliaires (35, 41) ; et
des passages (45) indépendants raccordant les chambres principales (34, 40) de' ces premier et deuxième cylindres d'ajustement de pression (26, 27) aux chambres de pression (22) respectives des premier et deuxième cylindres hydrauliques (14, 16) par l'intermédiaire d'un étranglement auxiliaire (51) dans les susdites chambres principales (34, 40),
**caractérisé par**
une chambre hermétique (59) qui peut se dilater et se contracter librement qui dessert chacune des deux susdites chambres auxiliaires (35, 41), des moyens d'application de pression (71) pour appliquer une pression à la chambre hermétique (59) afin de contracter celle-ci et un autre étranglement auxiliaire (76) qui raccorde les susdites chambres auxiliaires (35, 41) à la chambre hermétique (59).

2. Dispositif de suspension pour véhicules selon la revendication 1, **caractérisé en ce que** la susdite chambre hermétique (59) est formée dans l'espace entouré par un carter de cylindre (56) et un piston (58) dans le carter de cylindre (56), dans lequel les susdits moyens d'application de pression (71) mettent la susdite chambre hermétique (59) sous pression au moyen du susdit piston (58), et dans lequel le mouvement du susdit piston (58) est accouplé au mouvement des pistons (33, 39) des premier et deuxième susdits cylindres d'ajustement de pression (26, 27).

3. Dispositif de suspension pour véhicules selon la revendication 1, **caractérisé en ce que** la susdite chambre hermétique (59) est formée comme un élément qui peut être séparé et distinct des susdits premier et deuxième cylindres d'ajustement de pression (26, 27).

4. Dispositif de suspension pour véhicules selon au moins,l'une des revendications 1 à 3 précédentes, **caractérisé en ce que** les chambres de pression (22) des premier et deuxième cylindres hydrauliques (14, 16) sont raccordées aux chambres principales (34, 40) des premier et deuxième cylindres d'ajustement de pression (26, 27) par des conduites hydrauliques (46) et **en ce qu'**un dispositif de commande de vitesse (47) est situé dans lesdites conduites (46).

5. Dispositif de suspension pour véhicules selon la revendication 4, **caractérisé en ce que** chaque dispositif de commande de vitesse (47) est composé d'un' circuit parallèle comprenant un étranglement (48) et une vanne unidirectionnelle (49), ladite vanne unidirectionnelle (49) étant orientée de sorte qu'elle se ferme lorsque de l'huile hydraulique circule de l'un des premier et deuxième cylindres hydrauliques (14, 16) ou des deux vers lesdits premier et deuxième cylindres d'ajustement de pression (26, 27).

6. Dispositif de suspension pour véhicules selon au moins l'une des revendications 1 à 5 précédentes, **caractérisé en ce que** les chambres principales (34, 40) des premier et deuxième cylindres d'ajustement de pression (26, 27) sont raccordées par l'intermédiaire d'une vanne à étranglement variable (54).

7. Dispositif de suspension pour véhicules selon au moins l'une des revendications 1 à 6 précédentes, **caractérisé en ce que** l'étranglement auxiliaire (51) est prévu dans une conduite hydraulique séparée raccordant les chambres, principales (34, 40) des premier et deuxième cylindres d'ajustement de pression (26, 27) l'une à l'autre.

8. Dispositif de suspension pour véhicules selon au moins l'une des revendications 2 à 7 précédentes, **caractérisé en ce que** le carter de cylindre (56) d'un troisième cylindre d'ajustement de pression (28) comportant ladite chambre hermétique (59) consiste en une unité de carter (62) ronde dotée de couvercles d'extrémité (63, 64), **en ce qu'**une autre chambre auxiliaire (66) est formée entre l'élément de carter (62) et un couvercle d'extrémité (63), et **en ce qu'**un tuyau de raccordement (67) forme un circuit hydraulique (68) reliant les chambres auxiliaires (35, 41) des premier et deuxième cylindres d'ajustement de pression (26, 27) à cette autre chambre auxiliaire (66) du troisième cylindre d'ajustement de pression (28).

9. Dispositif de suspension pour véhicules selon la revendication 8, **caractérisé en ce que** les chambres auxiliaires (35, 41) des premier et deuxième cylindres d'ajustement de pression (26, 27) sont raccordées à l'autre chambre auxiliaire (66) du troisième cylindre d'ajustement de pression (28) par l'intermédiaire d'un étranglement auxiliaire (76) supplémentaire.

10. Dispositif de suspension pour véhicules selon la revendication 8 ou 9, **caractérisé en ce que** les chambres auxiliaires (35, 41) des premier et deuxième cylindres d'ajustement de pression (26, 27) et l'autre chambre auxiliaire (66) du troisième cylindre d'ajustement de pression (28) sont reliées à la chambre hermétique (59) par l'intermédiaire d'une vanne à étranglement variable (79).

11. Dispositif de suspension pour véhicules selon au moins l'une des revendications 8 à 10 précédentes, **caractérisé en ce que** les carters de cylindre (31, 37, 56) respectifs des premier à troisième cylindres d'ajustement de pression (26, 27, 28) sont unis en ayant un axe commun (32, 38, 57).

12. Dispositif de suspension pour véhicules selon la revendication 11, **caractérisé en ce que** le piston du troisième cylindre d'ajustement de pression (28) est une membrane (82) fixée au carter de cylindre (56).

13. Dispositif de suspension pour véhicules selon la revendication 11, **caractérisé en ce que** les pistons (33, 39, 58) des premier à troisième cylindres d'ajustement de pression (26, 27, 28) sont accouplés au moyen d'une attache (43).
